# EUROPEAN PATENT APPLICATION

(11) **EP 4 725 980 A1**
(43) Date of publication of application: **15.04.2026**
(21) Application number: 25207189.9
(22) Date of filing: 07.10.2025
(51) Int. Cl.: C08J 7/04, C08K 3/22, C08K 3/36, C09D 7/40

(54) **SILICONE COATING FILM, LAMINATED STRUCTURE, AND METHOD FOR MANUFACTURING THE LAMINATED STRUCTURE**

(30) Priority: 08.10.2024 JP 2024176585
(71) Applicant: Proterial, Ltd., Tokyo 135-0061 (JP)
(72) Inventor: NORIMASA, Oga, Tokyo, 135-0061 (JP); SUZUKI, Hideyuki, Tokyo, 135-0061 (JP); KASHIMURA, Seiichi, Tokyo, 135-0061 (JP); TERAKI, Naoto, Tokyo, 135-0061 (JP); KISHI, Masamichi, Tokyo, 135-0061 (JP); SASAMURA, Tatsuya, Tokyo, 135-0061 (JP); SUENAGA, Kazufumi, Tokyo, 135-0061 (JP); ONISHI, Toshimitsu, Tokyo, 135-0061 (JP)
(74) Representative: Betten & Resch

(57) **Abstract**

A silicone coating film provided as a surface layer of an irradiated object exposed to ultraviolet irradiation, includes a silicone rubber as a base material and titanium oxide particles with an average particle size of less than 100 nm. A laminated structure includes a first layer including a silicone rubber as a base material, and a second layer laminated on the first layer, wherein the second layer is the silicone coating film.

## Description

### CROSS-REFERENCE TO RELATED APPLICATIONS

The present patent application claims the priority of Japanese patent application No. 2024-176585 filed on October 8, 2024, and the entire contents thereof are hereby incorporated by reference.

### TECHNICAL FIELD

The present invention relates to a silicone coating film using silicone rubber as a base material, particularly a silicone coating film provided as a surface layer of an irradiated object (i.e., an object to be irradiated) that undergoes sterilization treatment by ultraviolet irradiation, a laminated structure having the silicone coating film, and a method for manufacturing the laminated structure.

### BACKGROUND OF THE INVENTION

Conventionally, medical instruments such as medical ultrasonic probes are sterilized by ultraviolet irradiation before or after use to prevent infection. The Applicant of the present application has proposed a laminated structure described in Patent Literature 1 as a sheath covering multiple wires and shields in a probe cable of an ultrasonic probe, and as a coating film covering the surface of the sheath.

The laminated structure described in Patent Literature 1 is a two-layer structure comprising a first layer and a second layer, both of which include silicone rubber as a base material. The first layer includes commonly used additives such as various crosslinking agents, crosslinking catalysts, anti-aging agents, plasticizers, lubricants, fillers, flame retardants, stabilizers, and colorants. The second layer includes silicone resin particles, titanium oxide particles, and nano-silica particles.

In the second layer, the silicone resin particles are used to impart surface irregularities to the surface of the second layer, thereby enhancing slip properties (i.e., slipperiness). The titanium oxide particles are used to shield against ultraviolet (UV) light by absorbing and/or scattering it, thereby improving UV resistance. Furthermore, the nano-silica particles are used to uniformly disperse the titanium oxide particles within the second layer. In Patent Literature 1, the average particle size of the silicone resin particles is 1 µm to 10 µm, the average particle size of the titanium oxide particles is 100 nm to 300 nm, and the average particle size of the nano-silica particles is 10 nm to 30 nm.

### Citation List

### Patent Literatures

Patent Literature 1: JP2024-51299A

### SUMMARY OF THE INVENTION

However, in the laminated structure described in the above-mentioned Patent Literature 1, there are cases where, for example, considering the design aesthetics, the appearance of the first layer is desired to be colored. Here, the following problem existed.

Specifically, regarding the various particles (silicone resin particles, titanium oxide particles, and nano-silica particles) added to the second layer, which is a silicone coating film, to enhance resistance to ultraviolet light, the titanium oxide particles are white among these particles. Consequently, even if the first layer is colored, the appearance seen through the second layer appears cloudy white, diminishing the aesthetic appearance. The desired design aesthetic is transparency in the visible light region.

As a means to solve the above-mentioned problem, for example, reducing the amount of titanium oxide particles added to the second layer could be considered. However, in that case, there was a possibility that resistance to ultraviolet light could not be ensured.

Therefore, an object of the present invention is to provide a silicone coating film having transparency in the visible light region while ensuring resistance to ultraviolet light, a laminated structure having the silicone coating film, and a method for manufacturing the laminated structure.

In order to achieve the above-mentioned object, one aspect of the present invention provides a silicone coating film provided as a surface layer of an irradiated object exposed to ultraviolet irradiation, comprising a silicone rubber as a base material and titanium oxide particles with an average particle size of less than 100 nm.

Further, in order to achieve the above-mentioned object, another aspect of the present invention provides a laminated structure comprising a first layer comprising a silicone rubber as a base material; and a second layer laminated on the first layer, wherein the second layer is the silicone coating film.

Still further, in order to achieve the above-mentioned object, a still another aspect of the present invention provides a method for manufacturing a laminated structure comprising a first layer comprising a silicone rubber as a base material, and a second layer laminated on the first layer, the second layer comprising a silicone rubber as a base material and titanium oxide particles with an average particle size of less than 100 nm, the method comprising a preparation step of preparing a liquid mixture of a silicone rubber component, which is a component of the silicone rubber serving as the base material of the second layer, and an organic solvent; a first dispersion step of adding a silicone-based surfactant to the liquid mixture and dispersing the added silicone-based surfactant; a second dispersion step of further adding the titanium oxide particles to the liquid mixture after the first dispersion step, and dispersing the added titanium oxide particles; a raw material applying step of using the liquid mixture as a liquid resin composition, which is a raw material for the second layer, and applying the liquid resin composition to a surface of the first layer; and a layer formation step of forming the second layer by vaporizing the organic solvent included in the liquid resin composition applied to the surface of the first layer and curing the silicone rubber component.

### Advantageous Effects of the Invention

According to the present invention, it is possible to provide a silicone coating film having transparency in the visible light region while ensuring resistance to ultraviolet light, a laminated structure having the silicone coating film, and a method for manufacturing the laminated structure.

### BRIEF DESCRIPTION OF THE DRAWINGS

FIG. 1 is a vertical cross-sectional view of a laminated structure according to an embodiment of the present invention.
FIG. 2A is a plan view showing a printed medium with printed characters.
FIGS. 2B and 2C are plan views showing samples with a silicone coating film formed on the surface of quartz glass.
FIG. 3 is a graph showing an example of the relationship between the average particle size of titanium oxide particles dispersed in the base material and the light transmittance at each wavelength.
FIG. 4 is a graph showing an example of the relationship between the average particle size of titanium oxide particles dispersed in the base material, the presence or absence of a surfactant, and the transmittance.
FIG. 5A is a configuration diagram showing an application example of the laminated structure according to the present embodiment applied to a probe cable of a medical ultrasonic probe.
FIG. 5B is a cross-sectional view along line A-A in FIG. 5A.

### DETAILED DESCRIPTION OF THE EMBODIMENT

### [Embodiment]

### (Structure of the Laminated Structure)

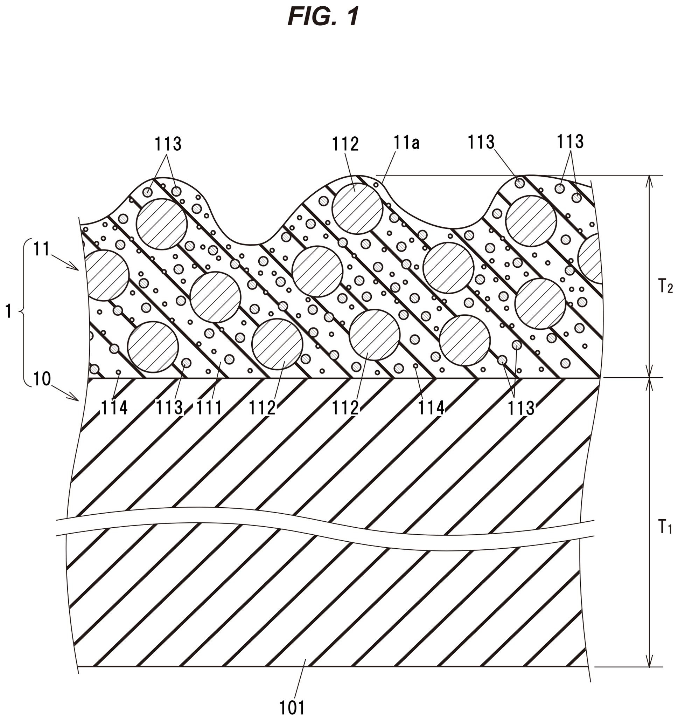

FIG. 1 is a schematic diagram showing a vertical cross-section of a laminated structure 1 according to an embodiment of the present invention. This laminated structure 1 is a two-layer structure comprising a first layer 10, wherein a base material 101 is silicone rubber, and a second layer 11 laminated onto the first layer 10. The second layer 11 has a base material 111 of silicone rubber and includes silicone resin particles (i.e., fine particles) 112, titanium oxide (TiO₂) particles (i.e., fine particles) 113, and nano-silica particles (i.e., fine particles) 114. The second layer 11 is transparent in the visible light region, allowing the color or characters of the first layer 10 to be seen through the second layer 11.

The laminated structure 1 is provided on an irradiated object to be irradiated with ultraviolet light. The second layer 11 is a coating film provided as a surface layer of the irradiated object and corresponds to the silicone coating film of the present invention. The second layer 11 directly receives ultraviolet irradiation. That is, the second layer 11 is the coating film constituting the surface layer of the laminated structure, which receives ultraviolet irradiation. Here, "ultraviolet" in ultraviolet irradiation refers to near-ultraviolet light, including UV-A (wavelength 315 to 380 nm), UV-B (280 to 315 nm), and UV-C (200 to 280 nm).

The silicone rubber, which is the base material 101, 111 for the first layer 10 and the second layer 11, is a type of silicone resin. Compared to polyvinyl chloride, which is commonly and widely used as a material for medical cables and tubes, silicone rubber has higher resistance to ultraviolet light.

The laminated structure 1 can take various forms depending on its application. For example, when applied as insulation for cables or tubes, the laminated structure 1 is formed into a tubular shape. When applied as sheets for constant-temperature greenhouses or sterilization chambers, the laminated structure 1 is formed into a sheet-like shape. When the laminated structure 1 is applied as a greenhouse sheet, it can block ultraviolet light from outside, suppressing their entry into the greenhouse. When applied as a sterilization chamber sheet, it can prevent ultraviolet light used for sterilization from leaking out of the chamber.

### (Structure of the Second Layer)

The second layer 11 corresponds to a coating film covering the surface of the first layer 10. Its raw material is composed of a liquid resin composition (silicone rubber coating agent) comprising silicone rubber as the base material 111, and including silicone resin particles 112, titanium oxide particles 113, and nano-silica particles 114. As the silicone rubber, which is the base material 111 of the second layer 11, for example, an addition-reaction type silicone rubber coating agent or a condensation-reaction type silicone rubber coating agent can be used. Particularly, from the perspective of adhesion to the first layer 10 and wipe resistance, it is preferable to use an addition-reaction type silicone rubber coating agent.

Here, "wipe resistance" in this specification means, as described in paragraphs [0108] to [0112] of JP2021-45525A, that a shear stress of 2×10⁻³ MPa to 4×10⁻³ MPa is applied, where a cotton linter including disinfectant alcohol is pressed against the second layer 11 (wiping direction length: 50 mm), the test involves wiping the surface of the second layer 11 for a wiping direction length of 150 mm at a speed of 80 to 120 times per minute for 20,000 cycles, and the difference (absolute value) in the static friction coefficient of the second layer 11 before and after the test is 0.1 or less. Note that shear stress refers to the pull-out force (resistance during pull-out) generated when a cable is held down by a cotton cloth impregnated with disinfectant ethanol and then pulled out from the cloth.

To achieve good slip properties and wipe resistance on the surface of the laminated structure 1, the thickness T₂ of the second layer 11 is preferably 3 µm or more. While the upper limit of the thickness of the second layer 11 is not particularly limited, it is preferably 100 µm or less from the perspectives of productivity, high flexibility, and high bendability. The second layer 11 may be laminated on both surfaces of the first layer 10.

Silicone resin particles 112 are included in the second layer 11 to impart surface irregularities with a surface 11a of the second layer 11. The presence of surface irregularities on the surface 11a reduces the contact area between the second layer 11 and a contact object compared to the case where the surface 11a has a flat surface, thereby enhancing slip properties.

Silicone resin includes fewer reactive groups (e.g., methyl groups) than silicone rubber and exhibits higher hardness than silicone rubber. Therefore, silicone resin particles 112 can more effectively suppress deformation of the surface irregularities when the second layer 11 contacts a contact object compared to silicone rubber particles. This is because when contact pressure is applied to the surface of the second layer 11 by the contact object, the higher the hardness of the particles, the more effectively deformation of the surface irregularities of the second layer 11 can be suppressed. This suppresses an increase in the contact area between the second layer 11 and the contact object, thereby maintaining slip properties.

Furthermore, the bond energy between atoms in the molecular structure of silicone resin is higher than that in the molecular structure of silicone rubber. Consequently, silicone resin exhibits higher resistance to UV-C light than silicone rubber. The C-H bonds abundant in silicone rubber have a bond energy (approximately 4.27 eV) lower than the energy of UV-C light (approximately 6.2 eV), causing these bonds to break upon UV-C irradiation. However, the Si-O bonds abundant in silicone resin have a bond energy (approximately 6.52 eV) greater than the energy of UV-C light, so they are not broken by UV-C irradiation. Therefore, silicone resin particles 112 exhibit superior resistance to UV-C light compared to silicone rubber particles.

The average particle size of silicone resin particles 112 is, e.g., 1 µm or more and 10 µm or less. The term "average particle size" in this specification refers to the size measured by laser diffraction scattering, including that of titanium oxide particles 113 and nano-silica particles 114 described later. Furthermore, the concentration of silicone resin particles 112 in the second layer 11 is, for example, 10 mass% or more and 60 mass% or less. Here, the concentration of silicone resin particles 112 is a value calculated assuming that all silicone rubber components in the silicone rubber coating agent (silicone rubber component + organic solvent) have cured into silicone rubber (a value approximately equivalent to the formulation mass ratio). More specifically, it is expressed as a percentage obtained by dividing the mass of the silicone resin particles 112 by the total mass of the silicone resin particles 112 and the silicone rubber component in the silicone rubber coating agent. On the other hand, the concentration of the nano-silica particles 114 is expressed as a percentage obtained by dividing the mass of the nano-silica particles 114 by the mass of the silicone rubber component in the silicone rubber coating agent. It may also be expressed as a percentage obtained by dividing the mass of the nano-silica particles 114 by the total mass of the nano-silica particles 114 and the silicone rubber component in the silicone rubber coating agent, similar to the calculation of the concentration of the silicone resin particles 112. Note that the concentration of the nano-silica particles 114 in the present specification is the value calculated by the former method.

The titanium oxide particles 113 included in the second layer 11 can shield ultraviolet (UV) light by absorbing and/or scattering it. By shielding UV light, the titanium oxide particles 113 suppress UV-induced degradation in the first layer 10 and the second layer 11, which have silicone rubber as the base material 101, 111. In particular, degradation of the base materials 101, 111 due to UV-C light (ultraviolet light in the 200 to 280 nm range) can be suppressed. The TiO₂ constituting the titanium oxide particles 113 may be of the anatase, rutile, or brookite type, or may be a mixture of two or more of these types. Furthermore, niobium oxide may be added to the titanium oxide to enhance its stability.

Regarding the Ti concentration (titanium concentration) in the second layer 11, if it is too high, for example, exceeding 4.4 mass%, the surface roughness of the second layer 11 increases due to the effect of the titanium oxide. As a result, not only does it become easier for dirt and bacteria to adhere, but removal also becomes difficult. Furthermore, this ultimately reduces the adhesion between the base material 111, composed of silicone rubber, and the silicone resin particles 112. Consequently, the silicone resin particles 112 become prone to detaching from the base material 111. This results in the loss of the irregularities of the surface 11a imparted to the second layer 11 by the silicone resin particles 112, thereby reducing the slip resistance of the surface of the second layer 11.

Furthermore, when the Ti concentration of the second layer 11 is 0.5 mass% or higher, it is possible to suppress the occurrence of cracks extending from the surface of the laminated structure 1 to the first layer 10 during a bending test equivalent to 45 to 50% tensile stress after irradiation with 1404 J/cm² of UV-C light. This bending test is performed as described in paragraphs [0106] to [0110] of Patent Literature 1. It involves winding a test piece formed on one surface of the laminated structure 1 onto a cylindrical wire such that an elongation equivalent to 45 to 50% is applied to the second layer 11, and then observing the outer surface of the wound portion of the test piece (the surface of the second layer 11) using an optical microscope.

Based on the above, it is preferable that the Ti concentration in the second layer 11 is 0.5 mass% or more and 4.4 mass% or less. Having the Ti concentration in the second layer 11 at 0.5 mass% or more and 4.4 mass% or less suppresses surface roughness of the second layer 11, enhances the slip properties of the surface of the second layer 11, and also suppresses crack generation in the second layer 11.

The Ti in the second layer 11 is included as an oxidized element in the titanium oxide particles 113. The Ti concentration in the second layer 11 is determined as the average value within a measurement area of 125 µm (width) × 95 µm (length) using an energy dispersive X-ray analyzer (EDS) mounted on a scanning electron microscope (SEM). All Ti at this concentration originates from the titanium oxide particles 113.

The titanium oxide particles 113 included in the second layer 11 may preferably be hydrophobic surface-treated titanium oxide particles. This configuration suppresses the formation of aggregates of titanium oxide particles 113 on the surface of the second layer 11, enabling uniform dispersion of the titanium oxide particles 113 within the second layer 11. Similarly, it is also preferable to use nano-silica particles 114 that have undergone hydrophobic surface treatment. This configuration suppresses the formation of aggregates of nano-silica particles 114 on the surface of the second layer 11, enabling the uniform dispersion of the titanium oxide particles 113 within the second layer 11. As a supplement, using particles with hydrophobic surface treatment as both the titanium oxide particles 113 and the nano-silica particles 114 not only suppresses the formation of aggregates between the titanium oxide particles 113 and the nano-silica particles 114, but also the formation of aggregates between the titanium oxide particles 113 and the silicone resin particles 112, and between the nano-silica particles 114 and the silicone resin particles 112.

Nano-silica particles 114 are included in the liquid resin composition (silicone rubber coating agent), which is the raw material for the second layer 11, imparting thixotropy. At this time, the nano-silica particles 114 form a high-bulk network structure in the liquid. This configuration slows the settling velocity of the silicone resin particles 112 and titanium oxide particles 113, thereby suppressing their settling (i.e., sedimentation). The average particle size of the nano-silica particles 114 is smaller than that of the titanium oxide particles 113, being 10 nm or more and 30 nm or less, e.g., 15 nm.

To effectively suppress the sedimentation of the silicone resin particles 112 and titanium oxide particles 113, the concentration of the nano-silica particles 114 in the second layer 11 is preferably 1.0 mass% or more from the perspective of imparting thixotropy. However, it is preferable to be 7.0 mass% or less because exceeding 7.0 mass% causes the color of the first layer 10, as seen through the second layer 11, to become cloudy. Therefore, it is preferable that the concentration be 7.0 mass% or less. That is, the concentration of the nano-silica particles 114 in the second layer 11 is preferably 1.0 mass% or more and 7.0 mass% or less. By constituting the second layer 11 in this manner, it is possible to suppress the color of the first layer 10 appearing cloudy when viewed through the second layer 11, while also suppressing the sedimentation of the silicone resin particles 112 and the titanium oxide particles 113, thereby uniformly dispersing the silicone resin particles 112 and the titanium oxide particles 113 in the liquid resin composition.

### (Structure of the First Layer)

The first layer 10 may also include titanium oxide particles, similar to the second layer 11, to suppress degradation caused by ultraviolet light transmitted through the second layer 11. Furthermore, as described above, while the first layer 10 uses silicone rubber as the base material 101, when applying the laminated structure 1 to a cable covering multiple wires and using the sheath of said cable as the first layer 10 of the laminated structure 1, silicone rubber including commonly used additives such as various crosslinking agents, crosslinking catalysts, anti-aging agents, lubricants, plasticizers, fillers, flame retardants, stabilizers, and colorants. The first layer 10 may also include organic UV absorbers instead of titanium oxide particles, or it may include both titanium oxide particles and organic UV absorbers. A thickness T₁ of the first layer 10 is set variably according to the application of the object (cable, tube, or various sheets) to which the laminated structure 1 is applied.

### (Method for Manufacturing the Laminated Structure)

A method for manufacturing the laminated structure 1, wherein a first layer 10 having silicone rubber as a base material 101 is laminated with a second layer 11 having silicone rubber as a base material 111 and including titanium oxide particles 113 with an average particle size of less than 100 nm, comprises: a raw material manufacturing step of manufacturing a liquid resin composition, which is the raw material for the second layer 11, a raw material applying step of applying (e.g., adhering) the liquid resin composition manufactured by the raw material manufacturing step to the surface of the first layer 10, and a layer formation step of forming the second layer 11 by vaporizing (vaporizing by heating) the organic solvent included in the liquid resin composition applied by the raw material applying step to cure the silicone rubber component.

The raw material manufacturing step described above includes a preparation step of preparing a liquid mixture including silicone rubber components, which are the base material for the second layer 11, and organic solvents, a first dispersion step of adding silicone-based surfactant (e.g., polyether-modified silicone oil) to the liquid mixture prepared in the preparation step and uniformly dispersing the added silicone-based surfactant by applying ultrasonic waves, a second dispersion step of further adding titanium oxide particles 113 to the liquid mixture after the first dispersion step and uniformly dispersing the added titanium oxide particles 113 by applying ultrasonic waves, a third dispersion step of adding nano-silica particles 114, having an average particle size smaller than that of the titanium oxide particles 113, to the liquid mixture after the second dispersion step, and uniformly dispersing the added nano-silica particles 114 by applying ultrasonic waves, and a fourth dispersion step of further adding silicone resin particles 112 having an average particle size of 1 µm or more to the liquid mixture after the third dispersion step and uniformly dispersing the added silicone resin particles 112 by applying ultrasonic waves.

Regarding the ultrasonic waves described above, the application conditions are identical for all steps. A proximity dual-frequency ultrasonic cleaner (Model: VS-D100) available from Azone Co., Ltd. is used in ultrasonic cleaning mode, oscillating at 24 kHz and 31 kHz frequencies switched rapidly, for 10 minutes.

The liquid mixture (silicone rubber component + organic solvent) obtained from the raw material manufacturing step becomes the liquid resin composition (silicone rubber coating agent) that is the raw material for the second layer 11. This liquid resin composition further includes silicone resin particles 112, titanium oxide particles 113, nano-silica particles 114, silicone rubber, and organic solvent, and further includes a silicone-based surfactant. By constituting the liquid mixture in this manner, namely, by including a silicone-based surfactant in the liquid resin composition that is the raw material for the second layer 11, it is possible to attach the silicone-based surfactant to the titanium oxide particles 113 when dispersing the titanium oxide particles 113 in the liquid mixture. This suppresses the occurrence of agglomeration of the titanium oxide particles 113. As a result, the titanium oxide particles 113 can be uniformly dispersed.

Preferably, the silicone-based surfactant is one used in cosmetics. More specifically, polyglycerin-modified silicone oil and polyether-modified silicone oil may be used. Furthermore, the amount (g) of silicone-based surfactant added to the liquid resin composition is preferably 1 to 20% of the amount (g) of titanium oxide particles 113 added.

As the organic solvent in the aforementioned liquid mixture (silicone rubber component + organic solvent), aromatic hydrocarbon solvents such as toluene or xylene, or aliphatic hydrocarbon solvents such as n-hexane, n-heptane, n-octane, isooctane, nonane, decane, undecane, or dodecane may be used, either alone or in mixtures of two or more types. Additionally, alcohols such as ethanol or isopropyl alcohol, or acetone, may also be used.

### (Appearance of the Laminated Structure)

Incidentally, depending on its application, the laminated structure 1 may require consideration of its design aesthetics. This may involve coloring the appearance of the laminated structure 1 as seen from the surface 11a side of the second layer 11, or adding characters or patterns to the laminated structure 1. For example, when the laminated structure 1 is applied as an insulator for cables, coloring the laminated structure 1 in various colors can not only enhance its aesthetic appearance but also help prevent miswiring. In this case, it is conceivable to incorporate a colorant into the first layer 10 or to print characters or patterns on the surface of the first layer 10 facing the second layer 11.

The inventors discovered that by reducing the primary particle size of titanium oxide particles 113 compared to conventional methods, it is possible to achieve a silicone coating film that maintains transparency (high aesthetic appearance) in the visible light region while ensuring resistance to ultraviolet light. The average particle size of titanium oxide particles 113 is effective for ensuring both UV resistance against wavelengths of 200 to 380 nm (including UV-A, UV-B, and UV-C) and transparency of the silicone-coated film in the visible light region, with a particle size of less than 100 nm. Furthermore, to ensure the transparency of the silicone-coated film in the visible light region while maintaining resistance to UV-C (200 to 280 nm) used for sterilization treatment, the average particle size of the effective titanium oxide particles 113 is less than 50 nm. On the other hand, if the average particle size of the titanium oxide particles 113 is too small, it becomes difficult to suppress the agglomeration of the titanium oxide particles 113. Therefore, it is desirable that the average particle size of the titanium oxide particles 113 be 30 nm or greater.

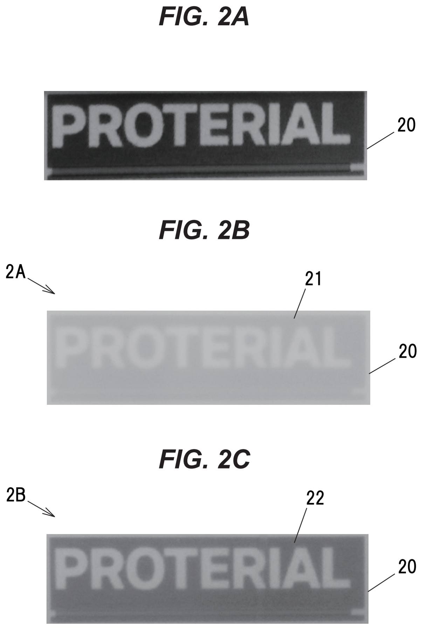

FIG. 2A is a plan view showing a printed medium 20 with characters printed thereon. FIGS. 2B and 2C are views showing the state of viewing the characters printed on the printed medium 20 through the silicone coating films 21, 22, respectively, after placing samples 2A, 2B, which have silicone coating films 21, 22 formed on the surface of quartz glass, onto the printed medium 20 shown in FIG. 2A. The silicone coating film 21 of sample 2A shown in FIG. 2B disperses titanium oxide particles with an average particle size of 250 nm in the silicone rubber as the base material. The silicone coating film 22 of sample 2B shown in FIG. 2C disperses titanium oxide particles with an average particle size of 35 nm in the silicone rubber as the base material. The quartz glass used was synthetic quartz glass manufactured by Kenis Co., Ltd. The concentration of titanium oxide particles in samples 2A, 2B, and the thickness of the silicone coating films 21, 22, are the same.

As is clearly evident from the comparison between sample 2A shown in FIG. 2B and sample 2B shown in FIG. 2C, reducing the particle size of the titanium oxide particles in the silicone rubber increases the transparency of the silicone coating film in the visible light region, thereby suppressing cloudiness and enhancing the visibility of characters and patterns printed on the printing medium 20.

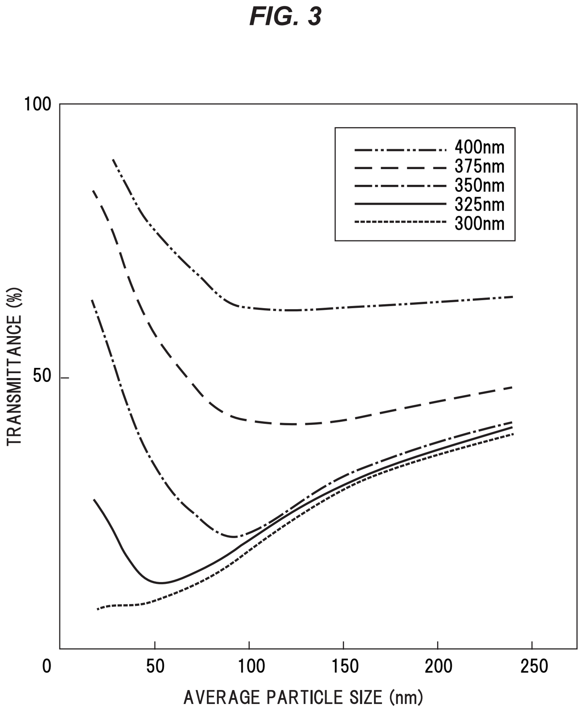

FIG. 3 is a graph showing an example of the relationship between the average particle size of titanium oxide particles dispersed in the base material and the transmittance of light at wavelengths of 300 nm, 325 nm, 350 nm, 375 nm, and 400 nm. As shown in this graph, setting the average particle size of the titanium oxide particles to less than 100 nm allows the transmittance in a specified wavelength band within the near-ultraviolet region to be made lower than the transmittance in the visible light region. That is, it is possible to selectively lower the transmittance in a specified wavelength band within the near-ultraviolet region while suppressing the decrease in transparency to light in the visible light region. Furthermore, as the average particle size of the titanium oxide particles decreases, the wavelength at which the transmittance becomes minimal (and the blocking rate becomes maximal) becomes shorter.

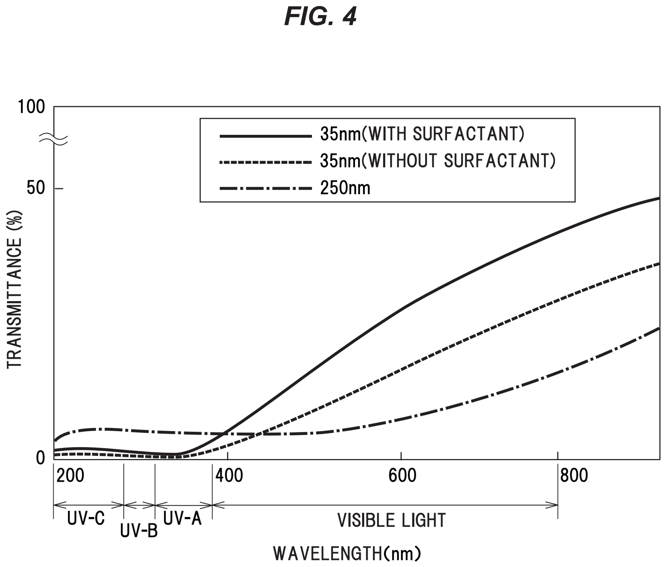

FIG. 4 is a graph showing an example of the relationship between the average particle size of titanium oxide particles dispersed in the base material, the presence or absence of a surfactant, and transmittance. It is a graph showing an example of the relationship between the wavelength of light and transmittance for a silicone-coated film (the second layer 11 of this embodiment) including titanium oxide particles 113 with an average particle size of 35 nm and a silicone-based surfactant (polyether-modified silicone oil). FIG. 4 also shows, for comparison, the relationship between light wavelength and transmittance for a silicone-coated film including titanium oxide particles 113 with an average particle size of 35 nm but no silicone-based surfactant, and for a silicone-coated film where the titanium oxide particles 113 have been replaced with particles having an average size of 250 nm. The film thickness of each silicone-coated film is the same. The concentrations and average particle sizes of the other additives (silicone resin particles 112 and nano-silica particles 114) in each silicone-coated film, as well as the concentration (mass%) of the titanium oxide particles, are also identical.

As shown in the graph of FIG. 4, setting the average particle size of the titanium oxide particles to 35 nm significantly reduces the transmittance of ultraviolet light in the UV-A, UV-B, and UV-C bands compared to when the average particle size is 250 nm, while also enabling high transmittance of light in the visible light region. Furthermore, adding a silicone-based surfactant suppresses the agglomeration of titanium oxide particles 113, dispersing them and further increasing the light transmittance in the visible light region.

In the graph of FIG. 4, the solid line indicates the transmittance when the titanium oxide particles have an average particle size of 35 nm and the silicone-based surfactant is included. However, if the average particle size of the titanium oxide particles is less than 50 nm, the transmittance in the near-ultraviolet region can be reduced compared to conventional formulations where the average particle size is 100 nm or more.

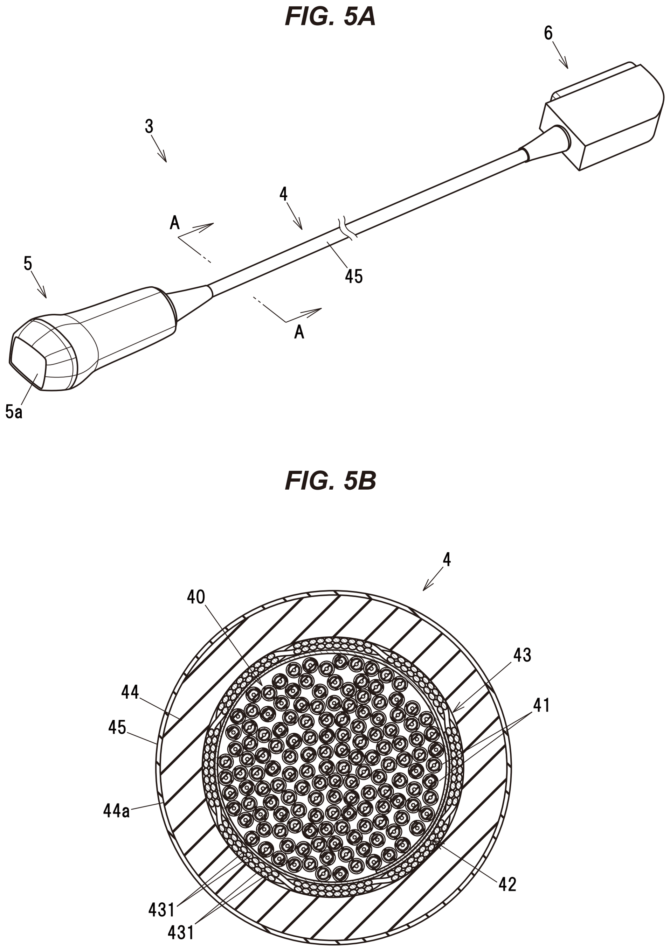

FIG. 5A is a configuration diagram showing an application example of the laminated structure 1 according to the present embodiment applied to the probe cable 4 of a medical ultrasonic probe 3. FIG. 5B is a cross-sectional view along line A-A in FIG. 5A. The probe cable 4 is an example of an irradiated object exposed to ultraviolet irradiation.

The ultrasonic probe 3 is used by a clinical laboratory technician for diagnosing a subject, and comprises a probe cable 4, a probe unit 5 provided at one end of the probe cable 4, and a probe connector 6 provided at the other end of the probe cable 4. The probe unit 5 has an ultrasonic transceiver surface 5a that is pressed against the subject's body surface. The probe connector 6 connects to an imaging device that performs ultrasound image formation processing. During patient diagnosis, the clinical technician presses the ultrasonic transceiver surface 5a of the probe unit 5 against the patient's body surface at various angles, causing the probe cable 4 to rub against the patient's body or the technician's clothing. After the examination, the ultrasonic probe 3 is disinfected by irradiation with UV-C light.

FIG. 5B shows a cross-section perpendicular to the longitudinal direction of the probe cable 4. The probe cable 4 comprises a cable core 40 including multiple signal wires 41, a binder tape 42 wrapped around the outer circumference of the cable core 40, a braided shield 43 covering the outer circumference of the binder tape 42, a sheath 44 covering an outer circumference of the braided shield 43, and a silicone coating film 45 covering a surface 44a of the sheath 44. The sheath 44 corresponds to the first layer 10 of the aforementioned laminated structure 1, and the silicone coating film 45 corresponds to the second layer 11 of the aforementioned laminated structure 1. That is, in the ultrasonic probe 3, the sheath 44 and the silicone coating film 45 correspond to the aforementioned laminated structure 1.

The signal wire 41 is a coaxial wire having an inner conductor and an outer conductor, in which one end is connected to an ultrasonic sensor inside the probe unit 5, and the other end is connected to a connector pin of the probe connector 6. The braided shield 43 is formed by weaving multiple shield strands 431 into a lattice pattern. The outer diameter of the probe cable 4 is, e.g., 5 mm or more and 11 mm or less. The thickness of the sheath 44 is, e.g., 0.5 mm or more and 1.5 mm or less. The thickness of the silicone coating film 45 is, e.g., 3 µm or more and 100 µm or less.

The silicone rubber base material of the sheath 44 has high resistance to ultraviolet light compared to, for example, polyvinyl chloride. However, it also possesses a characteristic sticky feel, sometimes referred to as tackiness. If the sheath 44 were not covered by the silicone coating film 45, friction between the probe cable 4 and the patient's body or the clinical technician's clothing could cause snagging. The silicone coating film 45 covers the entire circumference of the surface 44a along the longitudinal direction of the sheath 44. This improves the slip properties (sliding properties) of the probe cable 4 and enhances its resistance to ultraviolet light.

### (Advantageous Effects of Embodiment)

According to an embodiment of the present invention, the second layer 11 as the silicone coating film (i.e., the silicone coating film 45 on the probe cable 4) possesses transparency in the visible light region while ensuring resistance to ultraviolet light. Furthermore, while using titanium oxide particles 113 with smaller particle size and greater tendency to agglomerate than conventional ones, the use of nano-silica particles 114 suppresses the sedimentation of the titanium oxide particles 113, preventing the uniformity of their distribution within the base material 111 from being compromised. Furthermore, since the particle size of the titanium oxide particles 113 is smaller than conventional ones and the ratio of surface area to volume is larger, equivalent UV resistance to conventional ones can be obtained even when the amount of titanium oxide particles is reduced compared to conventional ones.

### (Summary of Embodiment)

Next, the technical concept understood from the above-described embodiment is described using reference numerals from the embodiment. However, the reference numerals in the following description do not limit the components in the claims to the specific parts shown in the embodiment.

According to the first feature, a coating film (second layer 11, silicone coating film 45) is provided as a surface layer of an irradiated object (probe cable 4) exposed to ultraviolet irradiation, wherein the silicone coating film (11, 45) includes a base material (111) of silicone rubber and includes titanium oxide particles (113) having an average particle size of less than 100 nm.

According to the second feature, in the silicone coating film (11, 45) as described in the first feature, the titanium oxide particles (113) have an average particle size of less than 50 nm.

According to the third feature, in the silicone coating film (11, 45) as described in the first feature, the titanium oxide particles (113) have an average particle size of 30 nm or more.

According to the fourth feature, the silicone coating film (11, 45) described in the first feature further includes a silicone-based surfactant.

According to the fifth feature, the silicone-coated film (11, 45) as described in the first feature further includes nano-silica particles (114) having an average particle size smaller than that of the titanium oxide particles (113), and silicone resin particles (112) having an average particle size of 1 µm or more.

According to the sixth feature, a laminated structure (1), in which a first layer (10, sheath 44) includes a silicone rubber as a base material is laminated with a second layer (11, 45), wherein the second layer (11, 45) is the silicone coating film (11, 45) according to any one of the first to fifth features.

According to the seventh feature, a method for manufacturing a laminated structure (1) includes a first layer (10, 44) including a silicone rubber as a base material (101), and a second layer (11) laminated on the first layer (10, 44), the second layer (11) including a silicone rubber as a base material (111) and titanium oxide particles (113) with an average particle size of less than 100 nm, the method including:
a preparation step of preparing a liquid mixture of a silicone rubber component, which is a component of the silicone rubber serving as the base material (111) of the second layer (11), and an organic solvent;
a first dispersion step of adding a silicone-based surfactant to the liquid mixture and dispersing the added silicone-based surfactant;
a second dispersion step of further adding the titanium oxide particles (113) to the liquid mixture after the first dispersion step, and dispersing the added titanium oxide particles (113);
a raw material applying step of using the liquid mixture as a liquid resin composition, which is a raw material for the second layer (11), and applying the liquid resin composition to a surface of the first layer (10); and
a layer formation step of forming the second layer (11) by vaporizing the organic solvent included in the liquid resin composition applied to the surface of the first layer (10) and curing the silicone rubber component.

According to the eighth feature, the method for manufacturing the laminated structure, as described in the seventh feature, further includes:
a third dispersion step of further adding nano-silica particles (114) having an average particle size smaller than the average particle size of the titanium oxide particles (113) to the liquid mixture after the second dispersion step, and dispersing the added nano-silica particles (114); and
a fourth dispersion step of further adding silicone resin particles (112) having an average particle size of 1 µm or more to the liquid mixture after the third dispersion step, and dispersing the added silicone resin particles (112).

The above describes the embodiment of the present invention; however, the above embodiment does not limit the invention claimed in the claims. It should also be noted that not all combinations of features described in the embodiment are necessarily essential to solve the technical problems of the invention.

Furthermore, the present invention is not limited to the above embodiment and may be practiced with appropriate modifications. For example, the above embodiment described the case where the irradiated object of the present invention was realized as a probe cable 4. However, the present invention is not limited to this. In addition to the aforementioned constant-temperature greenhouse sheets and sterilization chamber sheets, it can be applied to objects of irradiation such as automotive exterior or interior materials, outdoor products, or medical devices other than probe cables, and food processing equipment sterilized by ultraviolet light. That is, the present invention is not limited to ultraviolet light included in sunlight or ultraviolet light emitted from light-emitting elements such as deep ultraviolet LEDs for sterilization. It can be applied to various products exposed to ultraviolet irradiation as the irradiated object. The silicone coating film of the present invention is provided as the surface layer of the product, shielding ultraviolet light by absorption and/or scattering, thereby enhancing resistance to ultraviolet light.

## Claims

1. A silicone coating film provided as a surface layer of an irradiated object exposed to ultraviolet irradiation, comprising:
a silicone rubber as a base material and titanium oxide particles with an average particle size of less than 100 nm.

2. The silicone coating film, according to claim 1, wherein the titanium oxide particles have the average particle size of less than 50 nm.

3. The silicone coating film, according to claim 1, wherein the titanium oxide particles have the average particle size of 30 nm or more.

4. The silicone coating film, according to claim 1, further comprising:
a silicone-based surfactant.

5. The silicone coating film, according to claim 1, further comprising:
nano-silica particles having an average particle size smaller than the average particle size of the titanium oxide particles, and silicone resin particles having an average particle size of 1 µm or more.

6. A laminated structure comprising:
a first layer comprising a silicone rubber as a base material; and
a second layer laminated on the first layer,
wherein the second layer is the silicone coating film according to any one of claims 1 to 5.

7. A method for manufacturing a laminated structure comprising a first layer comprising a silicone rubber as a base material, and a second layer laminated on the first layer, the second layer comprising a silicone rubber as a base material and titanium oxide particles with an average particle size of less than 100 nm, the method comprising:
a preparation step of preparing a liquid mixture of a silicone rubber component, which is a component of the silicone rubber serving as the base material of the second layer, and an organic solvent;
a first dispersion step of adding a silicone-based surfactant to the liquid mixture and dispersing the added silicone-based surfactant;
a second dispersion step of further adding the titanium oxide particles to the liquid mixture after the first dispersion step, and dispersing the added titanium oxide particles;
a raw material applying step of using the liquid mixture as a liquid resin composition, which is a raw material for the second layer, and applying the liquid resin composition to a surface of the first layer; and
a layer formation step of forming the second layer by vaporizing the organic solvent included in the liquid resin composition applied to the surface of the first layer and curing the silicone rubber component.

8. The method for manufacturing the laminated structure, according to claim 7, further comprising:
a third dispersion step of further adding nano-silica particles having an average particle size smaller than the average particle size of the titanium oxide particles to the liquid mixture after the second dispersion step, and dispersing the added nano-silica particles; and
a fourth dispersion step of further adding silicone resin particles having an average particle size of 1 µm or more to the liquid mixture after the third dispersion step, and dispersing the added silicone resin particles.
